(19) Europäisches Patentamt
European Patent Office
Office européen des brevets

(11) EP 4 775 633 A1

(12) EUROPEAN PATENT APPLICATION

(43) Date of publication:
**15.07.2026 Bulletin 2026/29**

(21) Application number: **25151131.7**

(22) Date of filing: **10.01.2025**

(51) International Patent Classification (IPC):
***C08L 69/00*** *(2006.01)*

(52) Cooperative Patent Classification (CPC):
(C-Sets available)
**C08L 69/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **LUGGER, Jody Ann Martin**
  **Bergen op Zoom (NL)**
- **WIRTZ, Remco**
  **Bergen op Zoom (NL)**
- **VAN DE GRAMPEL, Robert Dirk**
  **Bergen op Zoom (NL)**
- **VAN DER MEE, Mark Adrianus Johannes**
  **Bergen op Zoom (NL)**
- **HAGENAARS, Arno**
  **Bergen op Zoom (NL)**

(74) Representative: **Modiano, Gabriella Diana et al**
**Modiano & Partners SA**
**Steinsdorfstraße 14**
**80538 München (DE)**

# (54) FLAME RETARDANT POLYCARBONATE COMPOSITIONS

(57) A thermoplastic composition includes: (a) from about 10 wt% to about 90 wt% of a polycarbonate component including a polycarbonate homopolymer; (b) from about 5 wt% to about 20 wt% of a poly (carbonate-siloxane) copolymer having a siloxane content of from 10 wt% to 45 wt%; (c) from about 5 wt% to about 25 wt% of a glass fiber; and (d) at least one phosphorous-based flame retardant. The at least one phosphorous based flame retardant provides a total phosphorous content of from 0.22 wt% to 0.37 wt% to the composition. The combined weight percent value of all components does not exceed 100 wt%, and all weight percent values are based on the total weight of the composition. In some aspects the compositions have good UL94 flame retardant and high heat (e.g., ball pressure test) performance.

EP 4 775 633 A1

(52) Cooperative Patent Classification (CPC): (Cont.)

C-Sets
**C08L 69/00, C08L 83/10, C08K 7/14, C08K 5/49**

## Description

### FIELD OF THE DISCLOSURE

The present disclosure relates to polycarbonate compositions, and in particular to polycarbonate compositions including a polycarbonate homopolymer, a poly (carbonate-siloxane copolymer), glass fiber and a phosphorous flame retardant that have good flame retardant and high heat properties.

### BACKGROUND OF THE DISCLOSURE

Conventional polycarbonate (PC) copolymer compositions such as SABIC's ELCRIN™ EXL5689 include a polycarbonate base resin, a phosphorous flame retardant (FR) agent, glass fiber, and a poly (carbonate-siloxane) copolymer. It is difficult to develop compositions based on these components that can achieve a combination of good flame retardant properties (UL94 V0 rating) and heat deflection temperature (HDT) properties (VICAT or ball pressure test). Traditional FR additives such as potassium diphenylsulfonesulfonate (KSS) and p-Toluenesulphonic acid sodium salt (NaTS) do not offer required flammability performance at low thicknesses, while conventional organophosphorous-based FR additives lack the required HDT performance.

These and other shortcomings are addressed by aspects of the present disclosure.

### SUMMARY

Aspects of the disclosure relate to thermoplastic compositions including: (a) from about 10 wt% to about 90 wt% of a polycarbonate component including a polycarbonate homopolymer; (b) from about 5 wt% to about 20 wt% of a poly (carbonate-siloxane) copolymer having a siloxane content of from 10 wt% to 45 wt%; (c) from about 5 wt% to about 25 wt% of a glass fiber; and (d) at least one phosphorous-based flame retardant. The at least one phosphorous based flame retardant provides a total phosphorous content of from 0.22 wt% to 0.37 wt% to the composition. The combined weight percent value of all components does not exceed 100 wt%, and all weight percent values are based on the total weight of the composition. In some aspects the compositions have good UL94 flame retardant and high heat (e.g., ball pressure test) performance.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes

mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\ 2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: (a) from about 10 wt% to about 90 wt% of a polycarbonate component including a polycarbonate homopolymer; (b) from about 5 wt% to about 20 wt% of a poly (carbonate-siloxane) copolymer having a siloxane content of from 10 wt% to 45 wt%; (c) from about 5 wt% to about 25 wt% of a glass fiber; and (d) at least one phosphorous-based flame retardant. The at least one phosphorous based flame retardant provides a total phosphorous content of from 0.22 wt% to 0.37 wt% to the composition. The combined weight percent value of all components does not exceed 100 wt%, and all weight percent values are based on the total weight of the composition.

### *Polycarbonate Component*

The polycarbonate component includes a polycarbonate homopolymer. As used herein, "polycarbonate" refers to an oligomer or polymer including residues of one or more dihydroxy compounds, e.g., dihydroxy aromatic compounds, joined by carbonate linkages; it also encompasses homopolycarbonates, polycarbonate copolymers, and (co)polyester carbonates. Exemplary polycarbonates, including polycarbonate homopolymers and polycarbonate copolymers, are available from SABIC.

The terms "BisA," "BPA," or "bisphenol A," which can be used interchangeably, as used herein refers to a compound having a structure represented by the formula:

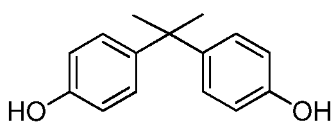

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

The composition includes from about 10 wt% to about 90 wt% of the polycarbonate component. In certain aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at most 90 wt%, or at most 85 wt%, or at most 80 wt%, or at most 75 wt%, of the polycarbonate component.

The polycarbonate component may include a recycled polycarbonate in some aspects. For example, the polycarbonate component may include a post-consumer recycled polycarbonate (PCR-PC). Exemplary PCR-PCs are available from Guangdong Rhino New Material Technology Co.

In certain aspects the polycarbonate component includes a combination of polycarbonate homopolymers, copolymers, or combinations thereof. For example the composition may include two or more polycarbonate homopolymers, such as a first polycarbonate homopolymer having a molecular weight of less than 28,000 (e.g., 21,000 to 22,000) and a second polycarbonate homopolymer having a molecular weight of 28,000 or higher (e.g. 30,000 to 31,000). In further aspects the composition may include at least one virgin polycarbonate homopolymer and a recycled (e.g., PCR) polycarbonate.

In specific aspects the composition includes from about 10 wt% to about 70 wt% of a PCR-PC. In particular aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 70 wt%, or at most 65 wt%, or at most 60 wt%, or at most 55 wt%, or at most 50 wt%, or at most 45 wt%, or at most 40 wt%, of the PCR-PC.

### *Poly (carbonate-siloxane) Copolymer*

The composition includes from about 5 wt% to about 20 wt% of a poly (carbonate-siloxane) copolymer having a siloxane content of from 10 wt% to 45 wt%. As used herein, the term "(carbonate-siloxane) copolymer" is equivalent to polycarbonate polysiloxane polymer, polysiloxane polycarbonate polymer, and polycarbonate-siloxane copolymer. In various aspects, the poly (carbonate-siloxane) copolymer can be a block copolymer including one or more polycarbonate blocks and one or more polysiloxane blocks. The poly (carbonate-siloxane) copolymer includes polydiorganosiloxane blocks including structural units of the general formula (1) below:

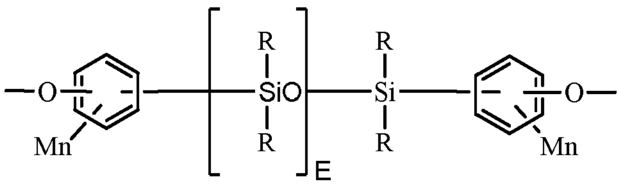

(1)

wherein the polydiorganosiloxane block length (E) is about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$- $C_{12}$aralkoxy, $C_7$- $C_{12}$ alkylaryl, or $C_7$-$C_{12}$ alkylaryloxy, and where each n is independently 0, 1, 2, 3, or 4.

The poly (carbonate-siloxane) copolymer also includes polycarbonate blocks including structural units of the general formula (2) below:

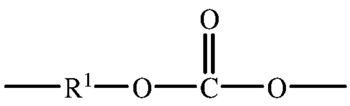

(2)

wherein at least 60 percent of the total number of $R^1$ groups include aromatic moieties and the balance thereof include aliphatic, alicyclic, or aromatic moieties. Poly (carbonate-siloxane) materials include materials disclosed and described in U.S. Patent No. 7,786,246, which is hereby incorporated by reference in its entirety for the specific purpose of disclosing various compositions and methods for manufacture of same.

Non-limiting examples of poly (carbonate-siloxane) copolymers may include various copolymers available from SABIC™. As used herein, the term poly (carbonate-siloxane) copolymer may refer to LEXAN™ EXL-polycarbonate resin or LEXAN™ resin (commercially available from SABIC™) according to the content of siloxane in the polycarbonate-polysiloxane copolymer.

In some aspects, the composition includes a poly (carbonate-siloxane) copolymer having a siloxane content of from about 10 wt% to about 45 wt%. In further aspects the poly (carbonate-siloxane) copolymer has a siloxane content of at least 10 wt%, or at least 15 wt%, or at least 18 wt%, or at least 19 wt%, or at least 20 wt%, or about 20 wt%, or at least 25 wt%, or at least 30 wt%, or at least 35 wt%, or at least 38 wt%, or at least 39 wt%, or about 40 wt%, or at most 45 wt%, or at most 42 wt%, or at most 41 wt%, or at most 40 wt%, or at most 35 wt%, or at most 30 wt%, or at most 25 wt%, or at most 22 wt%, or at most 21 wt%.

In a specific example, the poly (carbonate-siloxane) copolymer includes about 20 wt% siloxane based upon the total weight of the poly (carbonate-siloxane) copolymer. An example of such a poly (carbonate-siloxane) copolymer is available from SABIC as the "opaque" EXL or C9030P. In a particular example the poly (carbonate-siloxane) copolymer includes about 40 wt% siloxane based on the weight of the poly (carbonate-siloxane) copolymer; one such poly (carbonate-siloxane) copolymer is available from SABIC.

### *Glass Fiber*

Compositions according to aspects of the disclosure include from about 5 wt% to about 25 wt% of a glass fiber. The glass fiber can be surface-treated with a surface treatment agent containing a coupling agent. Appropriate coupling agents can include, but are not limited to, silane-based coupling agents, titanate -based coupling agents or a mixture thereof. Suitable silane-based coupling agents can include aminosilane, epoxysilane, amidesilane, azidesilane and acrylsilane. In one aspect, the glass fiber is selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin (e.g., the polycarbonate component described herein). The sizing composition facilitates wet-out and wet-through of the polymeric base resin upon the fiber strands and assists in attaining desired physical properties in the thermoplastic composition.

In certain aspects the glass fiber is a bonding glass fiber. Exemplary glass fibers are available from 3B Fiberglass.

In various further aspects, the glass fiber has a round (or circular), flat, or irregular cross-section. Thus, use of non-round fiber cross sections is possible. In a still further aspect, the glass fiber has a circular cross-section. In yet further aspects, the diameter of the glass fiber is from 5 micrometer (micron, μm) to 20 μm, including 5 μm, 6 μm, 7 μm, 8 μm, 9 μm, 10 μm, 11 μm, 12 μm, 13 μm, 14 μm, 15 μm, 16 μm, 17 μm, 18 μm, 19 μm, and 15 μm. In specific aspects the diameter is from 10 μm to 17 μm.

As discussed, glass fiber having a flat cross-section may be used. A flat glass fiber may have an aspect ratio for the flat cross-section of from about 2 to about 5. For example, the flat cross-section glass may have an aspect ratio of 4:1.

The composition includes from about 5 wt% to about 25 wt% glass fiber in some aspects. In further aspects the composition includes at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at least 16 wt%, or at least 17 wt%, or at least 18 wt%, or at least 19 wt%, or at least 20 wt%, or at most 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the glass fiber.

### *Phosphorous-Based Flame Retardant*

Compositions according to aspects of the disclosure include at least one phosphorous-based flame retardant. The phosphorous-based flame retardant is included in the composition to provide a total phosphorous content of from 0.22 wt% to 0.37 wt% to the composition. Available phosphorous-based flame retardants have varying phosphorous content, as a result the amount of flame retardant included in the composition can vary. Additionally, the composition may include a combination of phosphorous-based flame retardants which combined provide a total phosphorous content of from 0.22 wt% to 0.37 wt% to the composition.

In certain aspects the at least one phosphorous-based flame retardant includes phenoxy phosphazene (PPZ), bisphenol-a bis(diphenyl phosphate) (BPADP), phosphoric acid, P,P'-1,4-phenylene P,P,P',P'-tetraphenyl ester (SOL-DP), or a combination thereof.

In specific aspects the composition includes the PPZ flame retardant and has a total phosphorous content of from 0.22 wt% to 0.37 wt%. One exemplary PPZ flame retardant available from Fushimi has a phosphorous content of 13.4 wt%, so a composition including only this PPZ flame retardant would include from about 1.64 wt% to about 2.76 wt% PPZ.

In further aspects the composition includes the BPADP flame retardant and has a total phosphorous content of from 0.22 wt% to 0.245 wt%. One exemplary BPADP flame retardant available from Zhejiang Wansheng Co. has a phosphorous content of 8.9 wt%, so a composition including only this BPADP flame retardant would include from about 2.47 wt% to about 2.75 wt% BPADP.
In particular aspects the composition includes the SOL-DP flame retardant and has a total phosphorous content of from 0.22 wt% to 0.255 wt%. One exemplary SOL-DP flame retardant available from ICL has a phosphorous content of 10.8 wt%, so a composition including only this SOL-DP flame retardant would include from about 2.04 wt% to about 2.36 wt% SOL-DP.
As mentioned, the composition may include a combination of phosphorous-based flame retardants, so if a combination of the above (or other) flame retardants are used the total amount of each flame retardant included in the composition may be below the example ranges provided above.
The phosphorous-based flame retardant is included in the composition to provide a total phosphorous content of from 0.22 wt% to 0.37 wt% to the composition. In specific aspects the total phosphorous content of the composition is at least 0.22 wt%, or at least 0.23 wt%, or at least 0.24 wt%, or at least 0.25 wt%, or at least 0.26 wt%, or at least 0.27 wt%, or at least 0.28 wt%, or at least 0.29 wt%, or at least 0.30 wt%, or at least 0.31 wt%, or at least 0.32 wt%, or at least 0.33 wt%, or at least 0.34 wt%, or at least 0.35 wt%, or at least 0.36 wt%, or at most 0.37 wt%, or at most 0.36 wt%, or at most 0.35 wt%, or at most 0.34 wt%, or at most 0.33 wt%, or at most 0.32 wt%, or at most 0.31 wt%, or at most 0.30 wt%, or at most 0.29 wt%, or at most 0.28 wt%, or at most 0.27 wt%, or at most 0.26 wt%, or at most 0.25 wt%, or at most 0.24 wt%, or at most 0.23 wt%.

### *Other Additives*

In some aspects the composition includes at least one additional additive. The at least one additional additive may include, but is not limited to, an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.
In certain aspects the composition further includes an additional flame retardant component including an additional flame retardant different from the phosphorous-based flame retardant, a flame retardant synergist, an anti-drip agent, or a combination thereof.
In specific aspects the composition does not include polytetrafluoroethylene (PTFE). As used herein "does not include" or "does not comprise" means that the composition includes less than 1 wt%, or less than 0.1 wt%, or less than 0.01 wt%, or less than 0.001 wt%, or 0 wt%, PTFE. In further aspects "does not include" means that PTFE is not intentionally added to the composition.

### *Properties*

In some aspects a molded sample of the composition has a UL94 flame retardant rating of V0 at a thickness of from 1.0 mm to 1.5 mm, such as 1.0 mm, or 1.1 mm, or 1.2 mm, or 1.3 mm, or 1.4 mm, or 1.5 mm.
In further aspects a molded sample of the composition passes a Ball Pressure Test at 125 °C, as tested in accordance with IEC 60695-10-2.
In specific aspects a molded sample of the composition has a notched Izod impact (NII) strength of at least 10 kilojoules per square meter ($kJ/m^2$) at 23 °C as determined in accordance with ISO 180/1U. In particular aspects the composition has a NII strength of at least 11 $kJ/m^2$, or at least 12 $kJ/m^2$, or at least 13 $kJ/m^2$, or at least 14 $kJ/m^2$, or at least 15 $kJ/m^2$, or at least 16 $kJ/m^2$, or at least 17 $kJ/m^2$, or at least 18 $kJ/m^2$, or at least 19 $kJ/m^2$, or at least 20 $kJ/m^2$, or at least 21 $kJ/m^2$, or at least 22 $kJ/m^2$, or at least 23 $kJ/m^2$, or at least 24 $kJ/m^2$, or at most 50 $kJ/m^2$, or at most 45 $kJ/m^2$, or at most 40 $kJ/m^2$, or at most 35 $kJ/m^2$, or at most 30 $kJ/m^2$, at 23 °C as determined in accordance with ISO 18011U.
In certain aspects a molded sample of the composition has a VICAT softening temperature of at least 132 °C as tested in accordance with ISO 306. In other aspects a molded sample of the composition has a VICAT softening temperature of at least 133 °C, or at least 134 °C, or at least 135 °C, or at least 136 °C, or at least 137 °C, or at most 160 °C, or at most 155 °C, or at most 150 °C, or at most 145 °C, or at most 140 °C, as tested in accordance with ISO 306.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.
The extruders used in the disclosure may have a single screw, multiple screws, intermeshing co-rotating or counter rotating screws, non-intermeshing co-rotating or counter rotating screws, reciprocating screws, screws with pins,

screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects the article is a component of an electrical enclosure or a molded case circuit breaker (MCCB).

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

a. from about 10 wt% to about 90 wt% of a polycarbonate component comprising a polycarbonate homopolymer;
b. from about 5 wt% to about 20 wt% of a poly (carbonate-siloxane) copolymer having a siloxane content of from 10 wt% to 45 wt%;
c. from about 5 wt% to about 25 wt% of a glass fiber; and
d. at least one phosphorous-based flame retardant,

wherein the at least one phosphorous based flame retardant provides a total phosphorous content of from 0.22 wt% to 0.37 wt% to the composition, and
wherein the combined weight percent value of all components does not exceed 100 wt%, and all weight percent values are based on the total weight of the composition.

Aspect 2. The thermoplastic composition according to Aspect 1, wherein the at least one phosphorous-based flame retardant comprises phenoxy phosphazene (PPZ), bisphenol-a bis(diphenyl phosphate) (BPADP), phosphoric acid, P,P'-1,4-phenylene P,P,P',P'-tetraphenyl ester (SOL-DP), or a combination thereof.

Aspect 3. The thermoplastic composition according to Aspect 2, wherein the composition comprises the PPZ flame retardant and has a total phosphorous content of from 0.22 wt% to 0.37 wt%.

Aspect 4. The thermoplastic composition according to Aspect 2, wherein the composition comprises the BPADP flame retardant and has a total phosphorous content of from 0.22 wt% to 0.245 wt%.

Aspect 5. The thermoplastic composition according to Aspect 2, wherein the composition comprises the SOL-DP

flame retardant and has a total phosphorous content of from 0.22 wt% to 0.255 wt%.

Aspect 6. The thermoplastic composition according to any one of Aspects 1 to 5, wherein the polycarbonate homopolymer comprises a post-consumer recycled polycarbonate (PCR-PC).

Aspect 7. The thermoplastic composition according to Aspect 6, wherein the composition comprises from about 10 wt% to about 70 wt% of the PCR-PC.

Aspect 8. The thermoplastic composition according to any one of Aspects 1 to 7, wherein the poly (carbonate-siloxane) copolymer has a siloxane content of from about 15 wt% to about 25 wt%.

Aspect 9. The thermoplastic composition according to any one of Aspects 1 to 8, wherein the poly (carbonate-siloxane) copolymer has a siloxane content of from about 35 wt% to about 45 wt%.

Aspect 10. The thermoplastic composition according to any one of Aspects 1 to 9, wherein the composition further comprises an additional flame retardant component comprising an additional flame retardant different from the phosphorous-based flame retardant, a flame retardant synergist, an anti-drip agent, or a combination thereof.

Aspect 11. The thermoplastic composition according to any one of Aspects 1 to 10, wherein the composition does not comprise polytetrafluoroethylene (PTFE).

Aspect 12. The thermoplastic composition according to any one of Aspects 1 to 11, wherein the composition comprises at least one additional additive comprising an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

Aspect 13. The thermoplastic composition according to any one of Aspects 1 to 12, wherein a molded sample of the composition has a UL94 flame retardant rating of V0 at a thickness of from 1.0 mm to 1.5 mm.

Aspect 14. The thermoplastic composition according to any one of Aspects 1 to 13, wherein a molded sample of the composition passes a Ball Pressure Test at 125 °C, as tested in accordance with IEC 60695-10-2.

Aspect 15. The thermoplastic composition according to any one of Aspects 1 to 14, wherein a molded sample of the composition has a notched Izod impact strength of at least 10 kilojoules per square meter ($kJ/m^2$) at 23 °C as determined in accordance with ISO 18011U.

Aspect 16. The thermoplastic composition according to any one of Aspects 1 to 15, wherein a molded sample of the composition has a VICAT softening temperature of at least 132 °C as tested in accordance with ISO 306.

Aspect 17. An article comprising the thermoplastic composition according to any one of Aspects 1 to 16.

Aspect 18. The article according to Aspect 17, wherein the article is a component of an electrical enclosure or a molded case circuit breaker (MCCB).

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions prepared and tested herein included one or more of the components listed in Table 1:

**Table** 1 - **Components**

| | | |
|---|---|---|
| PC-1 | Linear poly(bisphenol A carbonate), CAS Reg. No, 25971-63-5, $M_w$ = 30,000-31,000 g/mol per GPC using polystyrene standards and calculated for polycarbonate, produced via interfacial polymerization and end-capped with phenol | SABIC |
| PC-2 | Linear bisphenol A polycarbonate, CAS Reg. No, 25971-63-5, $M_w$ = 21,000-22,000 g/mol, per GPC relative to linear bisphenol A polycarbonate standards, produced via interfacial polymerization and end-capped with p-cumylphenol | SABIC |
| PCR-PC | Post-consumer recycled polycarbonate, CAS Reg No. 25971-63-5, obtained as PC 110-NA-A | Guangdong Rhino New Material Technology Co. |

(continued)

| | | |
|---|---|---|
| PC-Si | Poly(carbonate-siloxane) having a siloxane content of 20 wt%, average PDMS block length of 45 units, $M_w$ = 28,000-32,000 g/mol per GPC using polystyrene standards and calculated for polycarbonate, produced by interfacial polymerization and end-capped with p-cumylphenol | SABIC |
| PETS | Pentaerythritol tetrastearate, CAS Reg. No. 115-83-3 | FACI SpA. |
| TBPP | Tris(2,4-di-tert-butylphenyl) phosphite, CAS Reg. No. 31570-04-4; obtained as IRGAFOS™ 168 | BASF |
| TSAN | Encapsulated polytetrafluoroethylene, CAS Reg. No. 9002-84-0, with 47-53 wt% poly(tetrafluoroethylene) | SABIC |
| SOL-DP | Phosphoric acid, P,P'-1,4-phenylene P,P,P',P'-tetraphenyl ester, CAS Reg. No. 51732-57-1; available as Fyrolflex Sol-DP 10.8 wt% phosphorous | ICL |
| BPADP | Bisphenol-a bis(diphenyl phosphate), CAS Reg. No. 5945-33-5, 8.9 wt% phosphorous | Zhejiang Wansheng Co., Ltd. |
| PPZ | Phenoxy phosphazene, 13.4 wt% phosphorus | Fushimi |
| TiO2 | Titanium dioxide, CAS Reg. No. 13463-67-7; available as KRONOS® 2233 | KRONOS |
| YD | Yellow dye, CAS Reg. No. 30125-47-4, obtained as Paliotol Yellow K 0961 | BASF |
| UV | Phenol, 2-(2H-benzotriazol-2-yl)-4,6-bis(1-methyl-1-phenylethyl), CAS Reg. No. 70321-86-7; available as TINUVIN 234 | BASF |
| GF | Glass fibers (non-bonding), CAS Reg. No. 65997-17-3 | 3B Fiberglass |

The compositions described herein were compounded on a 25 mm Werner Pfeiderer ZSK co-rotating twin-screw extruder with a vacuum vented standard LEXAN™ mixing screw operated at a screw speed of 300 rpm. Extruder settings are provided in Table 2. The strand was cooled through a water bath prior to pelletizing. An Engel 45, 75, 90 molding machine was used to mold the test parts for standard physical property testing. The pellets were dried for 2-3 hours at 120 °C in a forced air-circulating oven prior to injection molding. Table 3 lists the temperature profiles of the molding conditions:

**Table 2- Extruder Settings**

| Condition | Unit | Value |
|---|---|---|
| Extruder | UOM | 25 mm ZSK |
| Die | | 2 holes |
| Feed temperature | °C | 40 |
| Zone 1 temperature | °C | 180-200 |
| Zones 2-8 temperature | °C | 300 |
| Die temperature | °C | 300 |
| Screw speed | rpm | 300 |
| Throughput | kg/h | 16-30 |
| Vacuum 1 | bar | ~0.7 |

**Table 3 - Molding Settings**

| Condition | Unit | Value |
|---|---|---|
| Molding machine | UOM | Engel Molding Machine |
| Pre-drying time | h | 2-3 |
| Pre-drying temperature | °C | 120 |

(continued)

| Condition | Unit | Value |
|---|---|---|
| Hopper temperature | °C | 40 |
| Zone 1 temperature | °C | 250-310 |
| Zone 2 temperature | °C | 260-320 |
| Zone 3 temperature | °C | 270-330 |
| Nozzle temperature | °C | 265-325 |
| Mold temperature | °C | 80-110 |
| Screw speed | rpm | 25 |
| Back pressure | bar | 7 |
| Injection time | s | 1-2 |
| Approx. cycle time | s | 37 |

The compositions were evaluated for the properties indicated in the tables. Melt volume rate (MVR) was evaluated according to ASTM D1238-04 according to a Global test method at a temperature of 300 °C, a 1.2 kg load and for the indicated time (in seconds); results are reported in $cm^3/10$ min. Notched Izod Impact (NII) testing was evaluated at 23 °C according to ISO 180/1U using a specimen thickness of 3 mm and an impact energy of 5.5 joules (J); results are reported in kilojoules per square meter ($kJ/m^2$). Vicat softening temperature was evaluated in accordance with ISO 306 using a 50 newton (N) load at a heating rate of 120 °C per hour; results are reported in °C. The ball pressure test for determining heat resistance was performed according to IEC 60695-10-2 at 125 °C; to "pass" the sample must have an indentation of 2 millimeters (mm) or less.

Flammability tests were performed on samples at a thickness of 1.5 mm in accordance with the Underwriter's Laboratory (UL) UL 94 standard. In some cases, a second set of 5 bars was tested to give an indication of the robustness of the rating. In this report the following definitions are used as shown in Table 4. Total flame-out-times for all bars (FOT = t1 + t2) were determined.

**Table 4 - UL 94 Flame Retardant Rating Scale**

| Rating | $t_1$ and/or $t_2$ | 5-bar cumulative FOT | Burning drips igniting cotton |
|---|---|---|---|
| V0 | ≤ 10 | ≤ 50 | No |
| V1 | ≤ 30 | ≤ 250 | No |
| V2 | ≤ 30 | ≤ 250 | Yes |
| N.R. (no rating) | >30 | >250 | |

Flammability tests were performed on samples at a thickness of 1.5 mm in accordance with the Underwriter's Laboratory (UL) UL 94 standard. In some cases, a second set of 5 bars was tested to give an indication of the robustness of the rating. In this report the following definitions are used as shown in Table 4. Total flame-out-times for all bars (FOT = t1 + t2) were determined.

Compositions were prepared according to Tables 5A and 6A; properties of the compositions were evaluated with results reported in Tables 5B and 6B, respectively:

**Table 5A - Example and Comparative Compositions**

| Component | C1 | Ex1 | C2 | C3 | Ex2 | C4 | C5 |
|---|---|---|---|---|---|---|---|
| PC-1 | 34 | 34 | 34 | 34 | 34 | 34 | 34 |
| PC-2 | 40 | 40 | 40 | 40 | 39 | 39 | 40 |
| PCR-PC | | | | | | | |
| PC-Si | 12 | 12 | 12 | 12 | 12 | 12 | 12 |
| PETS | 0.30 | 0.30 | 0.30 | 0.30 | 0.30 | 0.30 | 0.30 |

(continued)

| Component | C1 | Ex1 | C2 | C3 | Ex2 | C4 | C5 |
|---|---|---|---|---|---|---|---|
| TBPP | 0.05 | 0.05 | 0.05 | 0.05 | 0.05 | 0.05 | 0.05 |
| TSAN | 0.50 | 0.50 | 0.50 | 0.50 | 0.50 | 0.50 | 0.50 |
| SOL-DP | 2.0 | 2.2 | 2.4 | | | | |
| BPADP | | | | 2.4 | 2.6 | 2.8 | |
| PPZ | | | | | | | 1.6 |
| TiO2 | 2.0 | 2.0 | 2.0 | 2.0 | 2.0 | 2.0 | 2.0 |
| YD | 0.03 | 0.03 | 0.03 | 0.03 | 0.03 | 0.03 | 0.03 |
| UV | 0.15 | 0.15 | 0.15 | 0.15 | 0.15 | 0.15 | 0.15 |
| GF | 9 | 9 | 9 | 9 | 9 | 9 | 9 |
| **Total (wt%)** | | | | | | | |
| Total phosphorous content (wt%) | 0.216 | 0.238 | 0.259 | 0.214 | 0.231 | 0.249 | 0.214 |

| Table 5B - Properties of Table 5A Compositions | | | | | | | |
|---|---|---|---|---|---|---|---|
| **Property** | **C1** | **Ex1** | **C2** | **C3** | **Ex2** | **C4** | **C5** |
| Vx, 1.0 mm | V1 | V0 | V0 | V1 | V0 | V0 | V1 |
| Total FOT (s) | 81 | 38 | 32 | 65 | 50 | 50 | 47 |
| Vx, 1.0 mm, repeat | V1 | | | V1 | | | V1 |
| Total FOT, repeat (s) | 68 | | | 46 | | | 63 |
| **Final Vx, 1.0 mm, standard conditions** | **V1** | **V0** | **V0** | **V1** | **V0** | **V0** | **V1** |
| Vx, 1.2 mm | V1 | V0 | V0 | V1 | V0 | V0 | V0 |
| Total FOT (s) | 55 | 38 | 38 | 60 | 39 | 42 | 47 |
| Vx, 1.2 mm, repeat | V1 | | | V0 | | | |
| Total FOT, repeat (s) | 57 | | | 40 | | | |
| **Final Vx, 1.2 mm, standard conditions** | **V1** | **V0** | **V0** | **V0** | **V0** | **V0** | **V0** |
| Vx, 1.5 mm | V0 | V0 | V0 | V0 | V0 | V0 | V0 |
| Total FOT (s) | 30 | 27 | 30 | 26 | 32 | 37 | 22 |
| Vx, 1.5 mm, repeat | V0 | V0 | V0 | V0 | V0 | V0 | V0 |
| Total FOT, repeat (s) | 14 | 21 | 30 | 32 | 30 | 28 | 20 |
| **Final Vx, 1.5 mm, standard conditions** | **V0** | **V0** | **V0** | **V0** | **V0** | **V0** | **V0** |
| MVR, 300 °C, 1.2 kg, 300 s ($cm^3$/10 min) | 6 | 7 | 7 | 6 | 6 | 7 | 6 |
| MVR, 300 °C, 1.2 kg, 720 s ($cm^3$/10 min) | 12 | 12 | 13 | 14 | 13 | 13 | 14 |
| NII, 3 mm, 5.5J, RT ($kJ/m^2$) | 20 | 19 | 20 | 20 | 19 | 19 | 21 |
| VICAT, 50N, 120 °C/h (°C) | 133 | 133 | 131 | 134 | 134 | 132 | 138 |
| BPT, 125 °C | Pass | Pass | Fail | Pass | Pass | Fail | Pass |
| Total phosphorous content (wt%) | 0.216 | 0.238 | 0.259 | 0.214 | 0.231 | 0.249 | 0.214 |

**Table 6A - Example and Comparative Compositions**

| Component | Ex3 | Ex4 | Ex5 | Ex6 | Ex7 | C6* |
|---|---|---|---|---|---|---|
| PC-1 | 34 | 34 | 34 | | 32.2 | 33.2 |

(continued)

| Component | Ex3 | Ex4 | Ex5 | Ex6 | Ex7 | C6* |
|---|---|---|---|---|---|---|
| PC-2 | 40 | 40 | 40 | 23.6 | 41.4 | 40 |
| PCR-PC | | | | 50 | | |
| PC-Si | 12 | 12 | 12 | 14 | 14 | 12 |
| PETS | 0.30 | 0.30 | 0.30 | 0.30 | 0.30 | 0.3 |
| TBPP | 0.05 | 0.05 | 0.05 | 0.05 | 0.05 | 0.05 |
| TSAN | 0.50 | 0.50 | 0.50 | 0.50 | 0.50 | 0.5 |
| SOL-DP | | | | | | |
| BPADP | | | | | | |
| PPZ | 1.8 | 2.0 | 2.2 | 2.4 | 2.4 | 2.8 |
| TiO2 | 2.0 | 2.0 | 2.0 | | | 2 |
| YD | 0.03 | 0.03 | 0.03 | | | 0.03 |
| UV | 0.15 | 0.15 | 0.15 | 0.15 | 0.15 | 0.15 |
| GF | 9 | 9 | 9 | 9 | 9 | 9 |
| **Total (wt%)** | | | | | | |
| Total phosphorous content (wt%) | 0.241 | 0.268 | 0.295 | 0.322 | 0.322 | 0.375 |
| C6* is a prophetic example | | | | | | |

**Table 6B - Properties of Table 6A Compositions**

| Property | Ex3 | Ex4 | Ex5 | Ex6 | Ex7 | C6* |
|---|---|---|---|---|---|---|
| Vx, 1.0 mm | V1 | V0 | V1 | | | |
| Total FOT (s) | 53 | 40 | 60 | | | |
| Vx, 1.0 mm, repeat | V0 | | V0 | | | |
| Total FOT, repeat (s) | 35 | | 36 | | | |
| **Final Vx, 1.0 mm, standard conditions** | **V0** | **V0** | **V0** | | | |
| Vx, 1.2 mm | V0 | V0 | V1 | | | |
| Total FOT (s) | 39 | 28 | 46 | | | |
| Vx, 1.2 mm, repeat | | | V1 | | | |
| Total FOT, repeat (s) | | | 46 | | | |
| **Final Vx, 1.2 mm, standard conditions** | **V0** | **V0** | **V1** | | | |
| Vx, 1.5 mm | V0 | V0 | V0 | V0 | V0 | |
| Total FOT (s) | 14 | 17 | 21 | 19 | 27 | |
| Vx, 1.5 mm, repeat | V0 | V0 | V0 | V0 | V0 | |
| Total FOT, repeat (s) | 15 | 26 | 22 | 23 | 16 | |
| **Final Vx, 1.5 mm, standard conditions** | **V0** | **V0** | **V0** | **V0** | **V0** | |
| MVR, 300 °C, 1.2 kg, 300 s ($cm^3$/10 min) | 6 | 7 | 7 | 8 | 7 | |
| MVR, 300 °C, 1.2 kg, 720 s ($cm^3$/10 min) | 13 | 13 | 14 | 11 | 9 | |
| NII, 3 mm, 5.5J, RT ($kJ/m^2$) | 23 | 22 | 22 | 25 | | |
| VICAT, 50N, 120 °C/h (°C) | 138 | 137 | 137 | 134 | | |
| BPT, 125 °C | Pass | Pass | Pass | Pass | Pass | Fail |

(continued)

| Final Vx, 1.5 mm, standard conditions | V0 | V0 | V0 | V0 | V0 | |
|---|---|---|---|---|---|---|
| Total phosphorous content (wt%) | 0.241 | 0.268 | 0.295 | 0.322 | 0.322 | 0.375 |

Each of the example compositions have a total phosphorous content of at least 0.22 wt%. As shown in the results, the example compositions all have a UL94 rating of V0 at a thickness of from 1.0 to 1.5 mm except for Ex5 which had a V1 rating at 1.2 mm. It is believed that this result is in error, however, since the sample has a V0 rating at 1.0 mm and 1.5 mm. Additionally, all of the example compositions passed the ball pressure test at 125 °C.

Of the compositions including PPZ, comparative composition C5 fails to achieve a V0 rating at 1.0 mm. Comparative composition C6* is a prophetic example that includes 2.8 wt% PPZ to provide a total phosphorous content of 0.375 wt% to the composition. It is believed that this example fails the ball pressure test. These results suggest that compositions including PPZ should have a total wt% phosphorous of from 0.22 wt% to 0.37 wt%.

Of the compositions including SOL-DP, comparative composition C1 fails to achieve a V0 rating at 1.0 mm and 1.2 mm, while comparative composition C2 fails the BPT at 125 °C. This suggests that compositions including SOL-DP should have a total wt% phosphorous of from 0.22 wt% to 0.255 wt%.

Of the compositions including BPADP, comparative composition C3 fails to achieve a V0 rating at 1.0 mm, while comparative composition C4 fails the BPT at 125 °C. This suggests that compositions including BPADP should have a total wt% phosphorous of from 0.22 wt% to 0.245 wt%.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a. from about 10 wt% to about 90 wt% of a polycarbonate component comprising a polycarbonate homopolymer;
b. from about 5 wt% to about 20 wt% of a poly (carbonate-siloxane) copolymer having a siloxane content of from 10 wt% to 45 wt%;
c. from about 5 wt% to about 25 wt% of a glass fiber; and
d. at least one phosphorous-based flame retardant,
wherein the at least one phosphorous based flame retardant provides a total phosphorous content of from 0.22 wt% to 0.37 wt% to the composition, and
wherein the combined weight percent value of all components does not exceed 100 wt%, and all weight percent values are based on the total weight of the composition.

**2.** The thermoplastic composition according to claim 1, wherein the at least one phosphorous-based flame retardant comprises phenoxy phosphazene (PPZ), bisphenol-a bis(diphenyl phosphate) (BPADP), phosphoric acid, P,P'-1,4-phenylene P,P,P',P'-tetraphenyl ester (SOL-DP), or a combination thereof.

**3.** The thermoplastic composition according to claim 2, wherein the composition comprises the PPZ flame retardant and has a total phosphorous content of from 0.22 wt% to 0.37 wt%.

**4.** The thermoplastic composition according to claim 2, wherein the composition comprises the BPADP flame retardant and has a total phosphorous content of from 0.22 wt% to 0.245 wt%.

5. The thermoplastic composition according to claim 2, wherein the composition comprises the SOL-DP flame retardant and has a total phosphorous content of from 0.22 wt% to 0.255 wt%.

6. The thermoplastic composition according to any one of claims 1 to 5, wherein the polycarbonate homopolymer comprises from about 10 wt% to about 70 wt% of a post-consumer recycled polycarbonate (PCR-PC).

7. The thermoplastic composition according to any one of claims 1 to 6, wherein the poly (carbonate-siloxane) copolymer has a siloxane content of from about 15 wt% to about 25 wt%, or from about 35 wt% to about 45 wt%.

8. The thermoplastic composition according to any one of claims 1 to 7, wherein the composition further comprises an additional flame retardant component comprising an additional flame retardant different from the phosphorous-based flame retardant, a flame retardant synergist, an anti-drip agent, or a combination thereof.

9. The thermoplastic composition according to any one of claims 1 to 8, wherein the composition does not comprise polytetrafluoroethylene (PTFE).

10. The thermoplastic composition according to any one of claims 1 to 9, wherein the composition comprises at least one additional additive comprising an acid scavenger, an antioxidant, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

11. The thermoplastic composition according to any one of claims 1 to 10, wherein a molded sample of the composition has a UL94 flame retardant rating of V0 at a thickness of from 1.0 mm to 1.5 mm.

12. The thermoplastic composition according to any one of claims 1 to 11, wherein a molded sample of the composition passes a Ball Pressure Test at 125 °C, as tested in accordance with IEC 60695-10-2.

13. The thermoplastic composition according to any one of claims 1 to 12, wherein a molded sample of the composition has a notched Izod impact strength of at least 10 kilojoules per square meter ($kJ/m^2$) at 23 °C as determined in accordance with ISO 180/1U.

14. The thermoplastic composition according to any one of claims 1 to 13, wherein a molded sample of the composition has a VICAT softening temperature of at least 132 °C as tested in accordance with ISO 306.

15. An article comprising the thermoplastic composition according to any one of claims 1 to 14, wherein the article is a component of an electrical enclosure or a molded case circuit breaker (MCCB).

Europäisches Patentamt
European Patent Office
Office européen des brevets

# EUROPEAN SEARCH REPORT

Application Number
EP 25 15 1131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/174801 A1 (DI LENA FABIO [NL] ET AL) 30 May 2024 (2024-05-30) | 1-3,7-15 | INV. C08L69/00 |
| Y | * paragraphs [0001], [0009]; claim 14; | 6 | |
| A | examples 13-14,17-22,24; table 7 * | 4,5 | |
| X | WO 2023/131909 A1 (SHPP GLOBAL TECH BV [NL]) 13 July 2023 (2023-07-13) | 1-3,7-15 | |
| Y | * paragraphs [0001], [0004], [0006], | 6 | |
| A | [0076]; examples E1,E2,E5,E6,E7,CE1 * | 4,5 | |
| Y | US 2024/002657 A1 (SANGREGORIO ANNA [NL] ET AL) 4 January 2024 (2024-01-04) * claim 9 * | 6 | |

TECHNICAL FIELDS SEARCHED (IPC)

C09J
C08L

The present search report has been drawn up for all claims

1

| Place of search | Date of completion of the search | Examiner |
|---|---|---|
| The Hague | 21 March 2025 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 15 1131

This annex lists the patent family members relating to the patent documents cited in the above-mentioned European search report. The members are as contained in the European Patent Office EDP file on
The European Patent Office is in no way liable for these particulars which are merely given for the purpose of information.

21-03-2025

| Patent document cited in search report | Publication date | Patent family member(s) | Publication date |
|---|---|---|---|
| US 2024174801 A1 | 30-05-2024 | CN 116981736 A | 31-10-2023 |
| | | EP 4305106 A1 | 17-01-2024 |
| | | US 2024174801 A1 | 30-05-2024 |
| | | WO 2022190000 A1 | 15-09-2022 |
| WO 2023131909 A1 | 13-07-2023 | CN 118510828 A | 16-08-2024 |
| | | EP 4460533 A1 | 13-11-2024 |
| | | KR 20240127467 A | 22-08-2024 |
| | | WO 2023131909 A1 | 13-07-2023 |
| US 2024002657 A1 | 04-01-2024 | CN 116368182 A | 30-06-2023 |
| | | EP 4247890 A1 | 27-09-2023 |
| | | US 2024002657 A1 | 04-01-2024 |
| | | WO 2022107029 A1 | 27-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7786246 B


### Non-patent literature cited in the description


- *CHEMICAL ABSTRACTS*, 80-05-7
- *CHEMICAL ABSTRACTS*, 25971-63-5
- *CHEMICAL ABSTRACTS*, 115-83-3
- *CHEMICAL ABSTRACTS*, 31570-04-4
- *CHEMICAL ABSTRACTS*, 9002-84-0
- *CHEMICAL ABSTRACTS*, 51732-57-1
- *CHEMICAL ABSTRACTS*, 5945-33-5
- *CHEMICAL ABSTRACTS*, 13463-67-7
- *CHEMICAL ABSTRACTS*, 30125-47-4
- *CHEMICAL ABSTRACTS*, 70321-86-7
- *CHEMICAL ABSTRACTS*, 65997-17-3